# EUROPÄISCHE PATENTANMELDUNG

(11) **EP 4 715 257 A1**
(43) Veröffentlichungstag der Anmeldung: **25.03.2026**
(21) Anmeldenummer: 25184267.0
(22) Anmeldetag: 20.06.2025
(51) Int. Cl.: F21V 8/00, G02B 27/09, F21W 111/00, G02B 6/26, G02B 6/42

(54) **OPTISCHES ELEMENT**

(30) Priorität: 19.06.2024 CH 6682024
(71) Anmelder: DMV d.o.o., 18000 Nis (RS)
(72) Erfinder: SARKOVIC, Dusan, 18000 Nis (RS); TOMOV, Aleksandar, 18000 Nis (RS)
(74) Vertreter: Körner, Thomas Ottmar

(57) **Zusammenfassung**

Die Erfindung betrifft ein optisches Element, insbesondere zur Verwendung als Lichtmischelement in einer Farb- und/oder lichtmischenden Sammeloptik, insbesondere als voll-farbtaugliches Pixel für bildgebende Anzeigetafeln im Freien, für Spotlichter oder Signalisierung, umfassend
a. ein Lichtmischelement, insbesondere einen Lichtleiterstab, mit einer Lichteintrittsfläche (3') und einem Lichtaustritt (4) und einer Mantelfläche, die sich insbesondere zwischen der Lichteintrittsfläche (3) und dem Lichtaustritt (4) erstreckt;
b. ein Lichtsammelelement, insbesondere eine Sammellinse, welches angeordnet ist, um aus dem Lichtaustritt austretendes Licht zumindest teilweise zu sammeln und/oder bündeln; dadurch gekennzeichnet, dass
c. zumindest ein Teil der Lichteintrittsfläche (3') und/oder der Mantelflä-che als Diffusor ausgebildet ist oder einen Diffusor aufweist.

## Beschreibung

Die Erfindung bezieht sich auf ein optisches Element, insbesondere zur Verwendung in einer farb- und lichtmischenden Sammeloptik, gemäss Anspruch 1.

### Hintergrund der Erfindung

Bisher wurden für Anzeigetafeln im Freien, welche variable Inhalte anzeigen müssen, wie etwa die sogenannten Wechselverkehrsanzeigen zur Verkehrsbeeinflussung, unter anderem Leuchtpunkte verwendet, welche eine Lichtquelle, insbesonders eine LED beinhalten. Durch elektronisches Ansteuern der LEDs können Leuchtpunkte ein- und ausgeschaltet werden, sowie auch graduelle Helligkeitsunterschiede darstellen. Diese Leuchtpunkte werden in unterschiedlichen Lichtfarben entweder nach darzustellenden Symbolen wie etwa Verkehrszeichen angeordnet, oder über grössere Flächen in einer Rasteranordnung eingesetzt, um damit beliebig programmierbare Grafiken, Texte oder auch Bilder darstellen zu können. Hier fungieren die Leuchtpunkte als sogenannte Pixel.

Im Gegensatz zu Grossflächen-Videoscreens auf LED-Basis, welche eine breite Lichtabstrahlung für ein davor befindliches Publikum benötigen, sind Verkehrsdarstellungen auf viel engere Abstrahl- oder Betrachtungswinkel begrenzt, da sie oft nur von einer Fahrspur aus grosser Entfernung gesehen werden müssen. Ausserdem zeigen sie in der Regel konstante Anzeigen und stehende Bilder, welche nur selten wechseln. Daraus resultieren erhebliche Vereinfachungen in der Ansteuerungselektronik und im Energieverbrauch, und damit weitaus geringere Anschaffungs- und Betriebskosten. Jedoch benötigen grössere Sichtentfernungen und Wettereinflüsse auch höhere Lichtstärken, es sind auch bestimmte lichttechnische Anforderungen vorgeschrieben.

Während bisher einfarbige Leuchtpunkte zumeist ausreichend sind, und die wenigen Bilddarstellungen etwa aus einer Kombination von je einem roten, grünen und blauen Lichtpunkt, zusammengefasst als ein Farbpixel, in Rasteranordnung ausgeführt werden, ist in Zukunft zu erwarten, dass immer mehr Farbdarstellungen in immer höherer Auflösung gewünscht werden und eine Pixelanordnung aus drei einfarbigen Leuchtpunkten zu gross und zu teuer würde. Im Vergleich dazu werden bei LED-Grossbild-Videoschirmen speziell dafür gefertigte LED verwendet, welche die drei Grundfarben Rot, Grün und Blau in Form dreier LED- Kristalle in einem gemeinsamen Gehäuse enthalten, wobei jede Farbe individuell angesteuert werden kann. Die drei Farben weisen dabei eine identische Abstrahlcharakteristik auf, welche etwa durch Streumittelbeigabe in die LED erreicht wird. Diese sogenannten FullColor- oder Multi-LED weisen eine ebene Lichtaustrittsfläche auf und sind im Pixel-Raster angeordnet. Sie strahlen ihr Licht als sogenannte Kosinus-Strahler ab, wobei das Licht im Zentrum am stärksten ist und bis zum Rand bei 90° allmählich nach der Funktion einer Cosinuskurve auf Null absinkt. Weil das Licht halbkugelförmig in einen sehr grossen Bereich abstrahlt, ist die Helligkeit auch im Zentrum eher gering und wegen des zunehmenden Energie- und Kühlaufwandes auch nicht steigerbar, weshalb solche Bildschirme nur im Innenbereich Verwendung finden. Im Aussenbereich werden Grossbild-Videoschirme ebenso mit speziellen, einzelnen roten, grünen und blauen LEDs mit integrierter, lichtbündelnder Linsenkuppe und ovaler Bauform und Lichtabstrahlung ausgeführt, weil die erforderliche Tageslicht-Helligkeit sonst nicht wirtschaftlich erreicht werden kann.

Bei allen LED-Grossbildschirmen ist es besonders wichtig, die Lichtabstrahlung der LED möglichst identisch auszuführen, da ansonsten bei seitlicher Betrachtung Farbverschiebungen, Farbsäume oder Farbflecken erscheinen. Es ist sehr aufwändig, einzelne einfarbige LED mit Linsenkuppe so zu verbauen, dass sie alle präzise zueinander ausgerichtet sind, insbesonders wenn die LEDs noch auf Drahtfüssen stehen. Die FullColor- oder Multi-LED werden als SMD-Bauform einfach im Raster auf eine geeignete Leiterplatte gelötet, wodurch auch eine genaue ebene Ausrichtung gegeben ist, die Lichtabstrahlung der drei LED-Kristalle ist bereits gleichartig.

Es liegt nun auf der Hand, die einfache und kostengünstige Bauform einer FullColor- oder MultiLED auch für hohe Lichtleistungen zu verwenden, indem das breit abstrahlende Licht einfach durch eine vorgesetzte Sammellinse gebündelt wird. Dieses Vorhaben scheitert jedoch daran, dass das Licht der drei Farbkristalle durch die vorgesetzte Linse nicht identisch zueinander gebündelt werden kann, sondern jede Farbe in eine andere Richtung zielt, entsprechend der Anordnung der Kristalle in der LED und den optischen Gesetzmässigkeiten der Bildgebung. Die Farben müssen daher vor einer Bündelung gut vermischt werden.

Es gibt bereits Vorschläge zur Farbvermischung unterschiedlicher LED. In der JP 2008 047482 A (Epson) wird eine Displaybeleuchtung durch Kanteneinstrahlung mit unterschiedlich farbigen LED, Polarisationsfilter und Farbvermischung vorgestellt. Hier ist die Aufgabenstellung grundsätzlich eine andere, die Farbmischung ohne Bündelung des Lichts entsteht ja bereits in den Multi-LED selbst. Auch in den bekannten Werbetafeln mit Kanteneinstrahlung durch LED in unterschiedlichen Farben entsteht automatisch eine sehr gute Farbvermischung ohne Bündelung, indem das Licht jeder LED über die ganze Anzeigefläche durch Mehrfachreflexion und Streuung verteilt wird. Auch Raumleuchten mit roten, grünen und blauen LED erzeugen ein gleichmässig ausgemischtes Weiss, sofern sie LED mit gleicher Abstrahlcharakteristik verwenden und durch zusätzliche Streuung mit strukturierten Abdeckscheiben weiter vergleichmässigen, sodass eine einheitliche Lichtwirkung und Farbe entsteht. Eine Farbmischung ohne Lichtbündelung kann somit einfach durch Lichtstreuung erfolgen. Es seien auch Statusanzeigen an elektronischen Geräten erwähnt, wo LED mit mehreren Kristallen verwendet werden, welche etwa Rot und Grün und als Mischfarbe Gelb aufweisen. Das Licht dieser LED wird mittels Lichtleiter zur Gehäuseoberfläche geleitet und dort breitstreuend abgestrahlt. Streuung bedeutet grundsätzlich auch einen Energieverlust des Lichtes, der sich in verringerter Bündelungsfähigkeit äussert, sowie Verluste durch Licht, welches durch Streuung das optische System vorzeitig verlässt und nicht genutzt werden kann.

Es ist aber auch schon eine Anordnung für gebündeltes Mischlicht bekannt. In der US 2010 020565 A1 (Seward) wird vorgeschlagen, das unterschiedlich gefärbte Licht der LEDs in einer kleinen (Ulbricht' sehen) Kugel vollständig zu vermischen und durch einen Lichtleiterstab in eine hochbündelnde Sammeloptik zu leiten. In der Praxis scheitert der Vorschlag an den hohen Streulichtverlusten an den Wänden der Kugel, sowie der erforderlichen Baugrösse und dem Aufwand für diese Anordnung.

Grundsätzlich ist eine Lichtübertragung mittels Lichtleiter, an dessen einem Ende eine Lichtquelle einstrahlt und an dessen anderem Ende das abstrahlende Licht durch eine Optik verteilt wird, schon lange bekannt. Dieses Basissystem kann jedoch durch eine enorme Vielzahl von Parametern abgewandelt werden, sodass eine unübersehbare Vielfalt an Eigenschaften und Gestaltungsmöglichkeiten entsteht. Betrachtet man die Eigenschaften eines Lichtleiters, so wird neben vielen anderen Eigenschaften im Allgemeinen angenommen, dass dieser Lichtleiter das Licht"per se" vermischt und daher grundsätzlich als Lichtfarb- oder Intensitätsmischer fungiert, wie etwa eine raue Oberfläche oder ein transluzentes, diffuses Material, wie beispielsweise Milchglas. Tatsächlich ist ein Lichtleiter ein hochtransparentes, durchaus präzises Optikelement, das sich in seiner Funktion durch nichts von einer optischen Linse, einem optischen Prisma oder anderen optischen Objekten unterscheidet. Es findet in seinem Inneren ein genau bestimmbarer Strahlengang statt, der nur von der Art der Lichtquelle und deren Einwirkung auf die Eintrittsfläche abhängt. Der Eindruck einer "vermischenden" Eigenschaft entsteht dadurch, dass das Licht durch vielfache Totalreflexion an den Lichtleiterwänden weitergeleitet wird und daher Oberflächentoleranzen einen sehr hohen Einfluss auf das Ergebnis haben, denn selbst kleinste Winkelfehler der Wandflächen werden bei der Totalreflexion verdoppelt, und die "Serienschaltung" der zahlreichen Reflexionen führt zu weiteren Toleranzen der Lichtablenkung. Daher weisen lange Lichtleiter in der Tat eine durch unvermeidliche Fertigungstoleranzen entstehende, vermischende Wirkung auf. Jedoch weisen kurze, sehr präzise gefertigte Lichtleiter keinerlei Mischwirkung auf, wodurch sie auf das Licht wie optische Linsen oder Prismen wirken. Ein anderes Kriterium ist die Effizienz des Systems Lichtquelle-Lichtleiter-Verteilung. Wird so gut wie jeder Lichtstrahl der Lichtquelle durch den Lichtleiter geführt und nutzbringend abgestrahlt, so ist die Effizienz nahezu 100%. Praktisch treten nicht alle Lichtstrahlen in den Lichtleiter, sie verfehlen die Eintrittsfläche oder werden daran zurück reflektiert. Die Materialien und Oberflächen absorbieren auch einen Teil des Lichts, und bei der Verteilung werden auch viele Lichtstrahlen in nicht notwendige Bereiche strahlen. Insbesonders weisen Faserbündellichtleiter sogenannte "Zwickelverluste" zwischen den runden Fasern auf, wobei Licht zwar hinstrahlt, aber nicht weitergeleitet wird. Ebenso ist auch die Mantelschicht einer Faser aus niedrig brechendem Material nicht in der Lage Licht weiter zu leiten.

Ein weiteres Kriterium ist die optische Wirkung eines Lichtleiters. Erweitert sich der Lichtleiter, so wird das Licht gebündelt, da bei jeder Reflexion an der Wand der Achswinkel jedes Lichtstrahles verringert wird. Verengt er sich jedoch, wird das Licht gestreut, wobei sehr rasch die "Apertur" des Lichtleiters überschritten wird. Das Licht trifft dann unter immer steiler werdenden Winkeln auf die Reflexionswände, bis es seitlich aus dem Lichtleiter austreten kann und verloren geht.

Die EP 0 596 865 A2 offenbart eine Vorrichtung zum Ausstrahlen von Licht, wobei ein Optikelement und als Lichtquelle eine LED verwendet werden. Dabei ist zu beachten, dass zur Übertragung des Lichts Glasfaserleitungen verwendet werden, welche auch nahezu beliebige Biegungen aufweisen können. Durch selektives Einschalten verschiedener LEDs wird der Abstrahlwinkel des Gesamtlichtstrahles beeinflusst. Des Weiteren weisen diese Glasfaserleitungen, bevorzugt Faserbündel, für sich betrachtet jeweils einen kreisförmigen Querschnitt auf.

Die US 2009/0052189 A1 offenbart eine Anordnung zur Herstellung eines Spotlights mit hoher Bündelung und gleichzeitiger Ausmischung der Grundfarben (R, G, B). Dieser LED-Strahler umfasst eine LED Lichtquelle mit mehreren LED Kristallen, eine Stablinse mit der Funktion eines Lichtleiterstabs und ein optisches Element. Dahingehend offenbart die US 2009/0052189 A1 eine bekannte Basisanordnung, ergänzt durch eine "erste" Bündelungsoptik, welche das von der LED-Lichtquelle abgestrahlte Licht auf die Eintrittsfläche eines quadratischen Lichtleiterstabes bündelt, welcher sich konisch verjüngt und dessen Austrittsfläche im Fokus eines Reflektors liegt. Dabei ist die primäre Sammellinse vor dem Lichtleiterstab angeordnet und das Licht der LED wird auf dessen Eintrittsfläche gebündelt, darüberhinaus weist die Stablinse von der LED-Lichtquelle zur Linse eine sich verjüngende Querschnittsform auf. Somit wird in der US 2009/0052189 A1 hauptsächlich ein Reflektor verwendet, da der sich konisch verjüngende Lichtleiterstab das Licht in eine Hemisphäre abstrahlt, welche durch einen Reflektor leichter zu bündeln ist. Hingegen wird beim zweiten in der US 2009/0052189 A1 vorgestellten Sammelsystem mittels dichroitischer Spiegel das Licht bereits vorgemischt. Diese wesentlichen Unterschiede begründen sich in dem Ziel der US 2009/0052189 A1, eine maximale Bündelung zu erzielen, während mit der vorliegenden Erfindung eine bestimmte Lichtverteilung erzielt werden soll.

Hingegen offenbart die WO 2006/054199 A1 eine Lichtquelle, welche eine Lichtmaschine mit zumindest einer LED und / oder zumindest einem Laserlicht emittierenden Element, zur Generierung und Einkopplung von Licht, in zumindest einem Lichtleiter, welcher zumindest ein Auskopplungselement zur Auskopplung des Lichts, umfasst.

Die EP 2 643 717 A1 hat sich zur Aufgabe gesetzt, eine Optik zu bauen, welche das Licht der unterschiedlichen LED-Kristalle einer solchen FullColor oder Multi-LED untereinander vollständig so vermischt, dass seine Intensität und Richtung auf kleinem Raum erhalten bleibt und anschliessend in bekannter Weise gebündelt werden kann, ohne für den Betrachter Farbunterschiede, Farbsäume oder Farbflecken auszubilden, wobei die Anordnung kostengünstig und klein sein muss. Das erfolgt dadurch, dass die LED-Lichtquelle mehrere LED-Kristalle enthält, wobei die Lichteintrittsfläche des Lichtleiterstabes vor der Lichtaustrittsfläche der Lichtquelle angeordnet ist und Licht jedes Kristalls einfängt, der Lichtleiterstab sich senkrecht zu seiner Eintrittsfläche erstreckt, sein Querschnitt konstant ist oder allmählich zunimmt und der Lichtaustritt des Lichtleiterstabes sich im Bereich des Fokus der vorgesetzten Sammellinse befindet.

Die EP 2 643 717 A1 ging von der Verwendung einer handelsüblichen RGB-LED mit Kristallen in den drei Grundfarben Rot, Grün, Blau (R, G, B) zur Erzeugung von Licht mit beliebiger Farbmischung aus. Während die LED selbst die Ansprüche einer Farbmischung erfüllt, indem sie das Licht jedes Kristalls als sogenannter Kosinus Strahler über eine Hemisphäre abstrahlt, erfüllt sie diese Lichtmischung nicht mehr, wenn eine lichtbündelnde Optik bzw. ein Objektiv davor gesetzt wird, um die Lichtabstrahlung in eine bestimmte Richtung zu bündeln und dadurch zu verstärken. Denn die Kristalle erzeugen in der Projektion je einen Farbfleck. Diese Farbflecken sind jedoch aufgrund der Anordnung der Kristalle nebeneinander nicht deckungsgleich und daher erscheint das gebündelte Licht nicht in der Mischfarbe, sondern farbfleckig.

Es schien daher notwendig, die drei Lichtfarben und Helligkeiten durch ein zusätzliches optisches Element zwischen LED und Optik "auszumischen", um eine einheitliche Mischfarbe zu erhalten. Hierbei soll maximale Effektivität erzielt werden und natürlich eine kostengünstige Ausführungsform des Optikelementes, das dann in hoher Stückzahl als Pixel einer Anzeigetafel Verwendung findet. Hohe Effizienz senkt den Stromverbrauch und die Erwärmung der Anzeigetafel und damit den Kühlungsaufwand und die Betriebskosten.

Erreicht werden sollte dies durch die Verwendung eines speziell gestalteten Lichtleiterstabes, welcher unmittelbar an der LED ansteht, deren gesamtes Licht aufnimmt, eine "Ausmischung" durchführt und direkt einstückig in die Sammeloptik mündet, wodurch einerseits höchstmögliche Effizienz gegeben ist und andererseits auch die Bündelungsfähigkeit des Lichts nicht verloren geht, sodass die Optik nicht grösser im Durchmesser wird als die bisherigen Optiken mit einfarbigen LEDs gleicher Bauform bzw. Gehäusegrösse.

Das aus der LED-Lichtquelle austretende Licht tritt sogleich in die Eintrittsfläche an der Stirnseite des Lichtleiterstabes ein. Sein Winkelbereich wird hierdurch von +/-90° (Hemisphäre) durch die Lichtbrechung in Abhängigkeit vom Brechungsindex des Lichtleitermaterials auf einen Winkel von beispielsweise +/- 42° zur Achse etwa bei Verwendung von Plexiglas reduziert. Dieser Winkel errechnet sich bekanntlich als Arkussinus vom Kehrwert des Brechungsindex. Der Lichtleiterstab kann aus beliebigen geeigneten transparenten Kunststoffen oder Gläsern gefertigt sein

Bei konstantem Querschnitt des Lichtleiterstabes trifft das Licht dann unter maximal diesen 42° auf die Wandungen, weshalb es total reflektiert wird, denn ein Durchtritt durch die Seitenflächen ist hier erst ab ca. 48° zur Achse möglich. Es gelangt somit in bekannter Weise durch mehrfache verlustlose Totalreflexion an den Wandungen des Lichtleiterstabes bis zu dessen Lichtaustritt, welcher durchaus gleich gross sein kann wie die Eintrittsfläche, und wird dabei durch die geometrische Gestaltung des Lichtleiterstabes vermischt. Ohne weitere Massnahmen würde das Licht beim Austritt wieder auf +1-90° aufgefächert. Der Lichtaustritt kann daher wie die LED- Austrittsfläche, jedoch mit durchmischtem Licht angesehen und mittels einer Sammellinse in bekannter Weise gebündelt werden. Die Durchmischung erfolgt damit im Wesentlichen ohne Lichtverluste. Die Durchmischung ist eine Folge der Mantelgestaltung und Länge des Lichtleiterstabes. Wegen der Vielzahl möglicher Querschnitte beschränkt sich die Schilderung der Wirkungsweise auf wenige einfache Annahmen, was aber keine Einschränkung des Schutzumfanges darstellt. Grundsätzlich vermischt jeder Lichtleiter das eintretende Licht nach Zurücklegung eines bestimmten Weges gleichmässig über den Lichtaustritt. Ursache sind neben der geometrischen Gestaltung vor allem kleine geometrische Abweichungen der Oberflächen, Oberflächenrauigkeit, Einschlüsse im Material oder eine Krümmung des Lichtleiterstabes, welche die Reflexionswinkel beeinflussen und damit zur Vermischung des Lichts beitragen. Diese Streuungen sorgen aber auch für Verluste, wenn die Reflexionswinkel so weit verändert werden, dass Licht nicht mehr total reflektiert wird und durch seitlichen Austritt verloren geht. Und je länger der Lichtleiter ist, umso mehr Licht geht auch durch Absorption im Material verloren. Dabei wird die Länge des Lichtleiterstabes so kurz wie erforderlich gehalten. Die Vermischung wird allein durch die Lichtleitergeometrie bewerkstelligt, Abweichungen der Geometrie oder des Materials zur Verbesserung der Mischung durch Streuwirkung verringern die Effizienz und sind weder wünschenswert noch notwendig. Der Lichtleiterstab verteilt darüber hinaus das Licht jedes Kristalls innerhalb der gleichen Lichtleiterlänge gleichmässig über den Lichtaustritt, unabhängig davon, ob ein Kristall mittig oder im Randbereich der Eintrittsfläche positioniert ist.

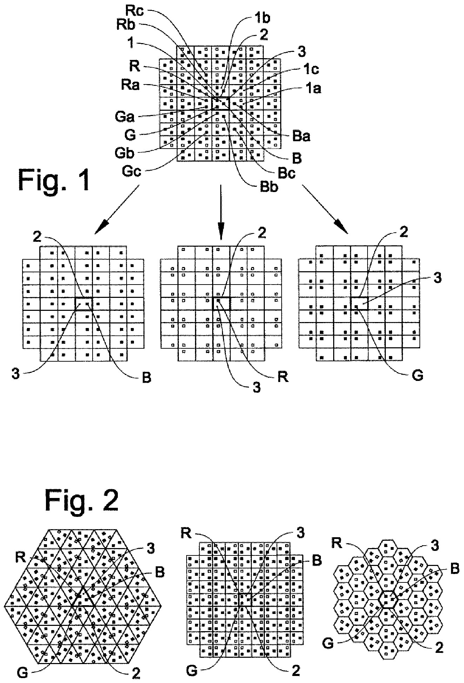

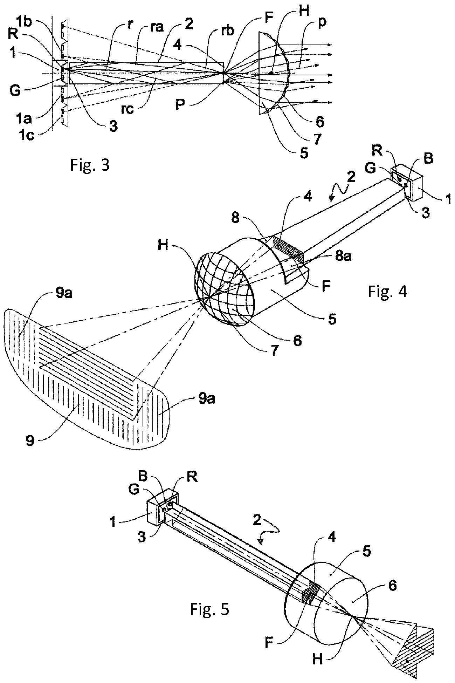

Nimmt man zunächst einen Lichtleiterstab mit konstantem, rechteckigem Querschnitt vor einer Lichtquelle mit etwa gleich grossem Lichtaustritt an, wie auch in Fig. 3 dargestellt, so kann man dessen Wirkung anhand Fig. 1 wie folgt beschreiben: Blickt man gedanklich von unmittelbar innerhalb des Lichtaustritts 4 des Lichtleiterstabes 2 gegen die Lichtquelle 1, so erscheint der Lichtleiterstab 2 wegen der Totalreflexion an den Seiten als eine rechteckige Röhre aus ebenen Spiegeln. Die durch die Lichteintrittsfläche 3 sichtbare Lichtquelle 1 spiegelt sich nicht nur an allen vier Seitenwänden, sondern es entsteht durch Mehrfachspiegelung der parallel gegenüberliegenden Spiegelflächen ein rechteckiges Muster von Spiegelbildern Ia, Ib, Ic ... derselben Lichtquelle 1. Es handelt sich hier um einen Effekt vergleichbar mit einem Blick in ein sogenanntes Kaleidoskop. Die Lichtquelle 1 weist hier drei Kristalle, R, G, B unterschiedlicher Farbe, insbesondere Rot, Grün und Blau auf, deren Spiegelbilder Rₐ, R_{b}, R_{c},... Gₐ, G_{b}, G_{c} ... Bₐ, B_{b}, B_{c} ... sind ebenfalls eingezeichnet. Ist der Lichtleiterstab 2 scharfkantig ausgeführt, so ist der Blick auf alle Spiegelbilder ungehindert möglich. Im Fall grösserer Kantenradien würden manche Spiegelbilder durch den Radius abgedeckt, bzw. käme es zu Reflexionen an den Radien selbst, wodurch die Darstellung beeinträchtigt würde. Befindet sich der LED-Kristall R, G, B nicht in der Mitte der Eintrittsfläche 3, so liegen manche Spiegelbilder enger zusammen, andere weiter auseinander, wobei sich im Mittel aber nichts Wesentliches ändert, denn jedes Spiegelbild verbleibt natürlich innerhalb seiner mitgespiegelten rechteckigen Eintrittsfläche. Das Feld der Spiegelbilder ist begrenzt durch den materialabhängigen Grenzwinkel der Totalreflexion, mit etwa 42° für Plexiglas, weiter aussen angenommene LED-Spiegelbilder können kein Licht mehr zum Lichtaustritt strahlen und sind deswegen nicht existent. Je länger der Lichtleiterstab 2, umso weiter weg ist der Betrachter, umso grösser das sichtbare Feld von Spiegelbildern, umso geringer sind die Blickwinkelunterschiede zwischen den Spiegelbildern und umso grösser die Gleichmässigkeit insgesamt. Die Einschränkung der Sichtbarkeit durch den Grenzwinkel der Totalreflexion erfordert daher eine solche Länge des Lichtleiterstabes 2, dass für die gewünschte Gleichmässigkeit der Vermischung ausreichend viele Spiegelbilder im Sichtfeld liegen. Die zeichnerische Darstellung kann hierbei als Anhaltspunkt dienen, es sind in einer Richtung 7, in der anderen Richtung 9 Spiegelbilder samt Original zu erkennen. Unter Einbeziehung des Grenzwinkels von etwa 42° kann man davon ausgehen, dass ein Lichtleiterstab 2, der 8- bis 10-mal länger als seine Eintrittsfläche 3 gross ist, sehr gute Ausmischungsergebnisse liefert. Das sind bei Verwendung handelsüblicher FullColor-LED für Grossbild-Videoanzeigen nur etwa 20 mm Lichtleiterstablänge.

Jedes Spiegelbild strahlt wie auch das Original ein volles Bündel an Lichtstrahlen innerhalb des Winkelbereiches bis etwa 42° aus, daher auch zu jedem Punkt des Lichtaustritts. Die Lichtbündel unterscheiden sich nur hinsichtlich der Intensität und oft auch ihrer Farbe in Abhängigkeit von ihrer Abstrahlrichtung. Bei Vorliegen von genügend vielen Spiegelbildern entsteht somit eine ausserordentlich gleichmässige Ausleuchtung des Lichtaustritts durch die Summe der Lichtstrahlenbündel jeder Farbe und aus jeder Richtung eines Spiegelbildes und der richtungsabhängigen Helligkeit der LED-Kristalle. Selbst die Positionsunterschiede der LED-Kristalle innerhalb der Lichtquelle gleichen sich aus, da ein Spiegelbild im Mittel näher, das nächste dafür weiter entfernt ist, was sich in der Gesamtwirkung fast völlig aufhebt. Über eine grössere Länge des Lichtleiterstabes kann die Qualität der Vermischung wegen der Zunahme der Anzahl von Spiegelbildern weiter verbessert werden.

Fig. 1 zeigt auch, dass nicht nur die Gesamtansicht der Spiegelbilder den Eindruck einer gleichmässigen Verteilung erweckt, sondern auch jede Farbe für sich relativ gleichmässig und regelmässig innerhalb der Gesamtansicht verteilt ist, wie die drei Ansichten getrennt nach R, G und B verdeutlichen. Unmittelbar vor Austritt des Lichts aus dem Lichtleiterstab 2 herrscht daher eine gleichmässig helle Verteilung des Lichts in Mischfarbe, innerhalb des Grenzwinkels von etwa 42° vor.

Der Blick von innerhalb des Lichtaustritts 4 auf das Feld der Spiegelbilder ist tatsächlich die Summe der Blicke in sämtlichen möglichen Richtungen auf ein und dieselbe Lichtquelle 1, wodurch sich ein mittlerer Gesamteindruck von Farbe und Helligkeit einstellt, was einer physischen Vermischung aller Lichtstrahlen etwa durch Zerstreuung durchaus ebenbürtig ist.

Alle Lichtstrahlen, die in den Lichtleiterstab eingetreten sind, treten wieder aus dem gleich grossen Lichtaustritt im selben Winkel aus. Damit erfolgt die Farb- und Helligkeitsmischung abgesehen von den physikalisch unvermeidlichen Grenzflächen- sowie Lichtleitungsverlusten im Material ohne Verluste, die Effizienz einer nachfolgenden Bündelung ist daher im Wesentlichen unverändert hoch.

Es ist naheliegend, dass solche Felder an Spiegelbildern mit geometrischen Formen des Lichtleiterstabes entstehen, welche eine Ebene lückenlos und gleichmässig füllen können, also gleichseitiges Dreieck, Rechteck und Quadrat, sowie regelmässiges Sechseck, wie in Fig. 2 dargestellt. Diese Lichtleiterstab-Querschnitte erzeugen jeweils eine lücken- und überlappungslose Fläche von Spiegelbildern mit regelmässiger Rasteranordnung, sofern die Spiegelflächen auch scharfkantig aneinandergrenzen. Die Durchmischung der Farben und Helligkeiten entsteht dabei wie zuvor geschildert weder durch Mischvorgänge noch durch Streuwirkung, sondern durch eine virtuelle regelmässige Anordnung baugleicher Lichtquellen als Spiegelbilder ein und derselben Lichtquelle, welche ihr Licht zum Lichtaustritt senden. Die Fokussierbarkeit bleibt ebenfalls im vollen Umfang erhalten, weil der Ein- und Austrittsquerschnitt des Lichtleiterstabes gleich gross sein kann. Und weil sich die Kristallposition in ihrer Auswirkung im Mittel weitgehend ausgleicht, ist auch die Abhängigkeit des Mischungsergebnisses davon äusserst gering.

Die gleichmässige Durchmischung allein ist nicht das einzige Kriterium für die optische Gestaltung, denn es muss auch die Abstrahlungsrichtung der Lichtstrahlen nach dem Lichtaustritt berücksichtigt werden. Im Fall einer regelmässigen Anordnung von diskreten Spiegelbildern der LED-Kristalle treten auch die Lichtstrahlen in den zugehörigen diskreten Richtungen aus, im Gegensatz zum Austritt aus der Lichtquelle stellen sie somit kein homogen divergierendes Lichtbündel mehr dar. Ohne vorgesetzte Optik würde das abgestrahlte Licht ein Muster aus hellen Lichtpunkten erzeugen, denn jedes Spiegelbild der LED erzeugt sein eigenes Lichtbündel durch den Lichtaustritt in der jeweiligen Ausstrahlungsrichtung. Dieser Effekt ist eine Folge der vorliegenden Vermischungsmethode. Im Fall einer echten Durchmischung aller Lichtstrahlen wäre das Lichtbündel genauso homogen wie auch beim Austritt aus der Lichtquelle selbst. Fig. 3 zeigt diesen Umstand in vereinfachter Form für das Licht eines LED-Kristalles R, indem aus Gründen der Übersichtlichkeit nur Achslichtstrahlen r, rₐ, r_{b}, r_{c} ... dargestellt sind, jeweils stellvertretend für ein enges Lichtstrahlenbündel. Das durch den Lichtaustritt 4 abgestrahlte Licht der Spiegelbilder bildet eine Garbe von engen Einzelbündeln. Das ist für den Mittelpunkt F des Lichtaustritts dargestellt, sowie für einen beliebig seitlich liegenden Punkt P des Lichtaustritts, für den sich die Abstrahlungsrichtung der engen Lichtbündel nur geringfügig ändert.

Wird nach dem Lichtleiterstab 2 eine Sammellinse 5 so positioniert, dass sich der Lichtaustritt 4 genau in ihrem Fokus F befindet, so werden die in jedem Punkt P des Lichtaustritts 4 vorhandenen divergierenden Lichtstrahlenbündel durch die Sammellinse in die diesem Punkt P entsprechende Richtung p durch den sogenannten Hauptpunkt H der Sammellinse 5 gebündelt. Die durch den Mittelpunkt des Lichtaustritts F gehenden Lichtstrahlbündel werden achsparallel ausgerichtet, Die Bündel der seitlich davon liegenden Punkte des Lichtaustritts werden in die zugehörigen Richtungen p parallelgerichtet. Der Lichtaustritt 4 wird also nach den optischen Gesetzen ins Unendliche projiziert, wobei jeder Punkt P des Lichtaustritts 4 sich in eine nach den optischen Gesetzen bestimmte Richtung p abbildet, unabhängig davon, welche Richtung die aus diesem Punkt austretenden einzelnen Lichtstrahlen haben. Die Lichtverteilung dieser optischen Anordnung ist somit ein gleichmässig heller, gleichfarbiger, auf den Kopf gestellter Bereich in der Gestalt des Lichtaustritts 4.

Diese Lichtverteilung kann durch optisch wirksame Geometrien oder Streu-Strukturen im Bereich der Sammellinse 5 weiter an die Anforderungen angepasst werden. Es liegt auf der Hand, dass der Lichtaustritt bereits eine für die gewünschte weitere Lichtverteilung und Streuung günstige Gestalt haben soll. Beispielsweise kann die Verteilung durch Rippen oder Noppen 7 auf der Austrittsfläche 6 der Sammellinse 5 in die Breite gestreut werden. Die vorerst gleichmässige Helligkeit wird damit hinsichtlich einer wunschgemässen Helligkeitsverteilung abgewandelt und verbreitert, ohne Beeinträchtigung der Mischfarbe.

In weiterer Ausgestaltung der Erfindung kann der Lichtleiterstab 2 sich auch konisch erweitern. Wie bekannt, wird hierdurch das Licht im Lichtleiterstab gebündelt, indem die Schräge jedes Lichtstrahles zur Achse bei jeder Totalreflexion an der Wand um den zweifachen Wert des dort vorherrschenden Konuswinkels reduziert wird. Im Fall eines rechteckigen Querschnitts kann eine Bündelung in horizontaler, vertikaler oder allseitiger Richtung erfolgen. Der Lichtaustritt 4 vergrössert sich damit entsprechend gegenüber der Eintrittsfläche 3. Blickt man durch ihn in den Lichtleiterstab 2 hinein, so krümmt sich die rasterartige Anordnung der Spiegelbilder in einer oder beiden Richtungen vom Betrachter weg. Die Reduktion der Lichtstrahlwinkel führt dabei zu einer Reduktion der Anzahl der wirksamen Spiegelbilder, was mit einer adäquaten Verlängerung des Lichtleiterstabes 2 ausgeglichen werden kann. Die Vermischung selbst funktioniert aber genauso wie zuvor. Die Vergrösserung des Lichtaustritts 4 hat eine aliquote Reduktion der Leuchtdichte, dafür eine höhere Ausgangsbündelung des Lichts zur Folge.

Die skizzierten Ausführungen von Lichtleiterstab-Querschnitten weisen das gleiche Funktionsprinzip auf. Es können aber auch beliebig andere Querschnitte verwendet werden, auch mit krummen Begrenzungsflächen. Die einzelnen Spiegelbilder wandeln sich dann zu verzerrten Figuren, oft nicht mehr als Spiegelbilder erkennbar, die Mischung kann nur mehr als Integral über differenzielle Spiegelbilder gesehen werden, es kommt zu Überlappungen oder Lücken bei den Spiegelbildern. Die Vermischung ist daher zumeist deutlich schlechter und in der Funktionsweise völlig unübersichtlich. Die notwendige Länge eines solchen Lichtleiterstabes ist dann nur mehr mittels Simulation oder Versuch bestimmbar.

Eine sehr schlechte Durchmischung weist gemäss der EP 2 643 717 A1 ein kreisförmiger Querschnitt auf, da ein Lichtstrahl, der durch das Zentrum geht, nach jeder Reflexion wieder nur durch das Zentrum läuft und ein Lichtstrahl, der am Zentrum vorbeigeht, immer nur im Kreis herum reflektiert wird. Eine Verbesserung ist dann auf die zusätzliche Streuwirkung durch Toleranzen der Geometrie, Oberflächenrauigkeit, Unstetigkeiten im Material oder eine Krümmung des Lichtleiterstabes angewiesen. Es empfiehlt sich daher, wo immer möglich, Polygone als Querschnitt zu wählen, um nicht auf die verlustbehafteten Streuwirkungen angewiesen zu sein. Bei derartigen und anderen, nicht kreisförmigen Querschnitten ist als Radius der Äquivalenzradius zu setzen. Dieser Äquivalenzradius ist der Radius, den ein Kreis mit gleicher Querschnittfläche wie der betrachtete Querschnitt, aufweist. Ferner kann der Lichtaustritt 4 nur virtuell vorhanden sein, die Sammellinse 5 schliesst unmittelbar und einstückig an den Lichtleiterstab 2 an. So muss das Licht nicht aus dem Lichtleiter aus- und wieder in die Sammellinse eintreten, sondern kann ohne Grenzflächenverluste weiterlaufen, bis es aus der Sammellinse austritt.

Gegenstand des europäischen Patents 2 643 717 in seiner erteilten Fassung ist somit eine Farb- und lichtmischende Sammeloptik, insbesondere als vollfarbtaugliches Pixel für bildgebende Anzeigetafeln im Freien, für Spotlichter oder Signalisierung, bestehend aus einer LED-Lichtquelle, sowie einem davor angeordneten Lichtleiterstab und einer Sammellinse, wobei die LED-Lichtquelle 1 mehrere LED-Kristalle (R, G, B) enthält, die Lichteintrittsfläche 3 des Lichtleiterstabes 2 vor der Lichtaustrittsfläche der LED-Lichtquelle 1 angeordnet ist und Licht jedes LED-Kristalls einfängt, wobei sich der Lichtleiterstab 2 senkrecht zur Eintrittsfläche 3 erstreckt und wobei sein Querschnitt konstant ist oder allmählich zunimmt, dadurch gekennzeichnet, dass der Lichtaustritt 4 des Lichtleiterstabes 2 sich im Bereich des Fokus (F) der Sammellinse 5 befindet, dass diese das aus dem Mittelpunkt (F) austretende Licht achsparallel bündelt und das Licht, das seitlich des Mittelpunktes (F) des Lichtaustritts 4 aus einem Punkt (P) des Lichtaustritts 4 austritt, in einer zugehörigen Richtungen (p) parallel bündelt, dass die Mantelfläche des Lichtleiterstabes 2 aus optisch hochglanzpolierten Ebenen gebildet ist, welche scharfkantig aneinandergrenzen und somit jeder Querschnitt die Form eines Polygons aufweist, dass das Material des Lichtleiterstabs 2 frei von lichtstreuenden Komponenten ist, und dass der Lichtaustritt 4 des Lichtleiterstabes 2 in seinem Umriss bereits weitgehend der auf den Kopf gestellten benötigten Lichtverteilung entspricht und das durchtretende Licht durch die vorgeschaltete Sammellinse 5 nach dem optischen Projektionsgesetz in Form des aufrechten Umrisses abgestrahlt wird.

Unter einer optisch hochglanzpolierten Fläche oder Ebene kann nach allgemeinen Verständnis eine Fläche oder Ebene verstanden werden, welche eine Oberflächenrauigkeit Rₐ von 0,05µm oder weniger aufweist.

Fig. 3 zeigt einen Schnitt durch eine entsprechende Anordnung samt Strahlengang, Fig. 4 und 5 weitere beispielhafte Optiken in anschaulicher Darstellung.

Im Einzelnen zeigt Fig. 4 eine Optik mit den angeführten Ausgestaltungen vor einer FullColor-LED-Lichtquelle 1. Der Lichtleiterstab 2 erweitert sich konisch in horizontaler Richtung, vertikal ist er konstant gehalten. Die Lage des Lichtaustritts 4 wird bestimmt durch das untere und obere Ende des Lichtleiterstabes 2. Der Lichtaustritt 4 ist nur virtuell vorhanden, denn das Material erstreckt sich weiter bis zur Austrittskuppe 6 der Sammellinse 5, deren Fokus im virtuellen Lichtaustritt 4 liegt. Anschliessend an den Lichtleiterstab 2 ist an der Oberseite eine geneigte Fläche 8 angesetzt, welche ein Spiegelbild des virtuellen Lichtaustritts unmittelbar oberhalb angrenzend erzeugt, ebenso werden die Seitenflächen 8a des Lichtleiterstabes weitergeführt, wobei auch sie ein angrenzendes Spiegelbild des virtuellen Lichtaustritts erzeugen. Die Projektion des Lichtaustritts 4 über die Sammellinse 5 ins Unendliche kehrt die Richtungen um, sie weist daher seitlich und unterhalb des projizierten Rechtecks noch weiterführende Lichtflächen 9, 9a auf, welche durch Spiegelung des Austritts an den Flächen 8 und 8a entstehen, weshalb hier in Summe eine im Wesentlichen dreieckige Lichtverteilung entsteht. Die gespiegelten Flächen 9, 9a sind nur teilweise vorhanden und weisen auch einen Helligkeitsgradienten auf, weil nur ein Teil der Lichtstrahlen aus dem Lichtaustritt 4 durch die Winkelbegrenzung auf ca. 42° die Reflexionsflächen 8, 8a überhaupt erreichen kann. Ein grosser Vorteil dieser angrenzenden Spiegelflächen ist der nahtlose Übergang in der Lichtverteilung zwischen dem Abbild des Lichtaustritts und den gespiegelten Flächen 9, 9a. Die Kuppe 6 der Sammellinse 5 kann mit einer Streustruktur 7 überlagert sein, welche insgesamt eine leichte Streuwirkung und somit nicht nur eine Vergleichmässigung der Lichtverteilung bewirkt, sondern auch einen Verlauf an den Rändern der Lichtverteilung erzeugt.

Es hat sich jedoch herausgestellt, dass Sammeloptiken in der Art wie vorstehend beschrieben Licht, welches unter einem vergleichsweise kleinen Winkel - insbesondere einem Winkel von weniger als 20°, 15° oder gar 10° - zur optischen Achse (der Sammellinse bzw. des Lichtleiterstabs) durch die Sammellinse 5 zumindest annähernd in Richtung der LED-Lichtquelle einfällt bzw. eingestrahlt wird, unter gewissen Umständen relativ stark zurückgestrahlt werden kann. Dies kann insbesondere bei Anwendungen für Anzeigetafeln und/oder Signalisierungen im Freien ein Problem darstellen, wenn eine entsprechende Lichteinstrahlung durch eine tiefstehende Sonne erfolgt, was bei in der Regel vertikal ausgerichteten Anzeigetafeln und/oder Signalisierungen insbesondere am Morgen oder am Abend der Fall sein kann. Die Problematik kann insbesondere dann auftreten, wenn sich der Lichtleiterstab (anders als beim Beispiel aus Fig. 1) in vertikaler Richtung von der Lichteintrittsfläche 3 zum Lichtaustritt 4 erweitert, weil in diesem Fall - bedingt durch die Gesetzte der Totalreflektion - Licht aus einem grösseren (vertikalen) Winkelbereich vom Lichtaustritt 4 zur Lichteintrittsfläche 3 geleitet wird als bei einem Lichtleiterstab mit konstanter vertikaler Dicke oder gar einer Verjüngung in vertikaler Richtung von der Lichteintrittsfläche 3 zum Lichtaustritt 4. Das durch die Sammellinse eingefallene und/oder eingestrahlte Licht kann bei Erreichen der Lichteintrittsfläche 4 von dieser zumindest teilweise (zurück-)reflektiert werden, erneut den Lichtleiterstab 2 und die Sammellinse 5 passieren und durch diese abgestrahlt werden. Eingefallenes oder -gestrahltes Licht, welches bei Erreichen der Lichteintrittsfläche 4 nicht reflektiert wird, kann auf die LED-Lichtquelle (1), insbesondere auf eine der Lichteintrittsfläche 3 zugewandte Oberfläche der LED-Lichtquelle 1 treffen, dort ebenfalls reflektiert werden und durch die Lichteintrittsfläche 3 in den Lichtleiterstab 2 eintreten, wo es sich in zumindest annähernd gleicher Weise ausbreiten kann wie von der LED-Lichtquelle emittiertes Licht 2. Dies kann insbesondere bei einer vergleichsweise schwachen LED-Lichtquelle 2 dazu führen, dass ein Betrachter nur mit Schwierigkeiten oder gar nicht mehr unterscheiden kann, ob die LED-Lichtquelle eingeschaltet ist oder nicht.

Bei Anzeigetafeln und/oder Signalisierungen insbesondere zur Verwendung im Freien, die in der Regel eine Vielzahl von Sammeloptiken wie vorstehend beschrieben enthalten - und somit auch eine Vielzahl von LED-Lichtquellen - kann eine maximale (elektrische) Leistungsaufnahme begrenzt sein. Da derartige Anzeigetafeln und/oder Signalisierungen mehrere hundert oder gar mehrere tausend sogenannte Pixel und damit eine entsprechende Anzahl an LED-Lichtquellen umfassen können, kann die maximale (elektrische) Leistungsaufnahme pro LED-Lichtquelle und/oder insgesamt insbesondere aus ökologischen Gründen begrenzt sein, aber beispielsweise auch um eine Überhitzung der Anzeigetafeln und/oder Signalisierungen insbesondere bei hohen Temperaturen im Sommer zu verhindern. Durch eine derartige Begrenzung kann jedoch auch eine maximale Helligkeit und/oder Lichtausbeute begrenzt sein.

Falls Lichtleiterstab bzw. Sammellinse so positioniert und/oder montiert sind, dass die optische Achse sich senkrecht zu einer Oberfläche der Anzeigetafeln und/oder Signalisierungen erstreckt (was in der Regel der Fall ist) und letztere so aufgestellt bzw. montiert sind, dass eine Oberflächennormale einer Anzeigefläche, welche insbesondere zumindest im Wesentlichen senkrecht zur Oberfläche der Anzeigetafeln verläuft, zumindest annähernd in einer horizontalen Richtung ausgerichtet ist und/oder verläuft (was in der Regel ebenfalls der Fall ist), kann bei tiefem Sonnenstand insbesondere am Morgen oder Abend Sonnenlicht wie weiter oben beschrieben unter einem vergleichsweise kleinen Winkel - insbesondere einem Winkel von weniger als 20°, 15° oder gar 10° - zur optischen Achse (der Sammellinse bzw. des Lichtleiterstabs) durch die Sammellinse 5 in die Sammeloptiken einfallen und/oder eingestrahlt werden, was aufgrund der oben beschriebenen Effekt zu einem reduzierten Kontrast führen und eine Erkennbarkeit und/oder Lesbarkeit angezeigter Symbole, Texte oder Ähnlichem erschweren kann.

Der Erfindung liegt daher die Aufgabe zugrunde, ein optisches Element, insbesondere zur Verwendung als Lichtmischelement in einer farb- und/oder lichtmischenden Sammeloptik sowie eine ein farb- und/oder lichtmischenden Sammeloptik anzugeben, welche die vorstehend geschilderten Nachteile vermeidet oder vermindert, sowie ein Verfahren zum Bereitstellen eines entsprechenden Systems.

### Kurze Beschreibung der Erfindung

Diese Aufgabe kann erfindungsgemäss durch ein optisches Element, insbesondere zur Verwendung als Lichtmischelement in einer farb- und/oder lichtmischenden Sammeloptik sowie eine ein farb- und/oder lichtmischenden Sammeloptik gemäss den unabhängigen Patentansprüchen gelöst werden.

Ein optisches Element, insbesondere zur Verwendung als Lichtmischelement in einer farb- und/oder lichtmischenden Sammeloptik, gemäss der Erfindung wie nachfolgend beansprucht kann die Merkmale von Anspruch 1 weiter unten umfassen.

Ein optisches Element, insbesondere zur Verwendung als Lichtmischelement in einer farb- und/oder lichtmischenden Sammeloptik, gemäss der Erfindung kann insbesondere umfassen:
a. ein Lichtmischelement, insbesondere einen Lichtleiterstab 2, mit einer Lichteintrittsfläche 3, einem Lichtaustritt 4 und einer Mantelfläche, die sich insbesondere zwischen der Lichteintrittsfläche 3 und dem Lichtaustritt 4 erstreckt, wobei die Mantelfläche insbesondere eine Vielzahl von Seitenflächen 2a umfasst, die sich insbesondere zwischen der Lichteintrittsfläche 3 und dem Lichtaustritt 4 erstrecken;
b. ein Lichtsammelelement, insbesondere eine Sammellinse, welches angeordnet ist, um aus dem Lichtaustritt austretendes Licht zumindest teilweise zu sammeln, bündeln und/oder fokussieren; wobei
c. zumindest ein Teil der Lichteintrittsfläche 3 und/oder der Mantelfläche, insbesondere ein Teil einer der Seitenflächen, als Diffusor ausgebildet ist oder einen Diffusor aufweist.

Bei dem Lichtmischelement kann es sich insbesondere um ein längliches, insbesondere stab- oder prismenförmiges, Element handeln, dessen erste Ausdehnung, insbesondere (maximale) Länge, *l* in einer Längsrichtung, insbesondere einer ersten Richtung entlang einer Längsachse, grösser, insbesondere wesentlich grösser ist als zweite und dritte Ausdehnungen *b* und *d* in einer zweiten bzw. dritten Richtung senkrecht zur Längsrichtung und senkrecht zueinander. *b* und *d* können insbesondere eine (maximale) Breite bzw. eine (maximale) Dicke des Lichtmischelements darstellen. *b* = *d* kann gelten, bei einem Lichtmischelement mit kreisförmigem Querschnitt ferner *b = d* = 2r, wobei r der Radius des kreisförmigen Querschnitts sein kann.

Die Lichteintrittsfläche kann insbesondere durch eine erste Stirnfläche des Lichtmischelements gebildet sein. Der Lichtaustritt kann insbesondere in Form einer Lichtaustrittsfläche gebildet sein, welche insbesondere durch eine zweite Stirnfläche des Lichtmischelements gebildet sein kann, die von der ersten Stirnfläche beanstandet sein kann, insbesondere um zumindest annähernd die Länge *l*. Lichteintrittsfläche und/oder Lichtaustrittsfläche können zumindest annähernd senkrecht zu der Längsrichtung und/oder der Längsachse verlaufen.

Die Mantelfläche kann einen kreisförmigen, elliptischen oder ovalen Querschnitt umfassen. Alternativ kann die Mantelfläche aus einer Vielzahl von aneinandergrenzenden, insbesondere scharfkantig aneinandergrenzenden, zumindest annähernd ebenen Seitenflächen 2a gebildet sein, wobei jede der Flächen zumindest annähernd parallel zu der Längsrichtung und/oder der Längsachse verlaufen kann, und/oder jeder Querschnitt (senkrecht zu der Längsrichtung und/oder der Längsachse) durch die Mantelfläche die Form eines Polygons aufweisen kann.

Eine Querschnittsfläche, die Breite b und/oder die Dicke *d* des Lichtmischelements oder der Mantelfläche können von der Lichteintrittsfläche (3) bis zum Lichtaustritt (4) konstant bleiben. Die Querschnittsfläche, die Breite b und/oder die Dicke *d* des Lichtmischelements oder der Mantelfläche können von der Lichteintrittsfläche (3) zum Lichtaustritt (4) hin zunehmen, insbesondere monoton, streng monoton oder kontinuierlich.

Eine optische Achse a₁ des Lichtmischelements kann zumindest annähernd parallel zu der Längsrichtung und/oder der Längsachse verlaufen und insbesondere mit der Längsachse zusammenfallen.

Das Lichtsammelelement kann zumindest annähernd die Form und/oder Funktion einer Sammellinse aufweisen, und insbesondere durch eine sphärische oder asphärische Linse gebildet sein. Auch eine Fresnellinse kann zum Einsatz kommen. Eine optische Achse a₂ des Lichtsammelelements kann zumindest annähernd parallel zu der optischen Achse des Lichtmischelements verlaufen und insbesondere mit letzterer zusammenfallen. Ein Brennpunkt und/oder eine Brennebene des Lichtsammelelements kann vom Lichtaustritt 4 beabstandet und/oder in einem Inneren des Lichtmischelements situiert sein, insbesondere in einer Entfernung von mehr als 10% der Länge *l* des Lichtmischelements vom Lichtaustritt 4.

Zwischen dem Lichtmischelement und dem Lichtsammelelement kann ein Lichtleitelement vorgesehen sein, welches dazu ausgelegt ist, zumindest einen Teil eines aus dem Lichtaustritt austretenden Lichts dem Lichtsammelelement zuzuführen. Das Lichtleitelement kann insbesondere ein Prisma mit kreisförmigem, elliptischem oder ovalem Querschnitt umfassen. Eine optische Achse des Lichtleitelements kann zumindest annähernd parallel zu der optischen Achse des Lichtmischelements und/oder des Lichtsammelelements verlaufen und insbesondere mit einer oder beiden letzteren zusammenfallen.

Lichtmischelement, Lichtsammelelement und ggf. Lichtleitelement können aus transparenten Materialien gebildet sein, insbesondere aus Glas oder transparentem Kunststoff, insbesondere Polycarbonat. Lichtmischelement, Lichtsammelelement und ggf. Lichtleitelement können einstückig, insbesondere aus einem einzigen, insbesondere homogenen, Material, ausgebildet sein.

Der Diffusor kann als Oberflächen-Diffusor wie in https://de.wikipedia.orq/w/index.php?title=Diffusor (Optik)&oldid=245594983 beschrieben auf, an und/oder in zumindest einem Teil der Lichteintrittsfläche 3a und/oder der Mantelfläche gebildet sein. Der Diffusor kann regelmässige und/oder unregelmässige Strukturen aufweisen, deren typische Abmessungen insbesondere zwischen einem Zehntel und einem Vielfachen einer Wellenlänge oder der Wellenlängen einer Lichtstrahlung betragen, die der Diffusor streuen soll. Derartige Strukturen können während eines Herstellungsprozesses integral mit dem Lichtmischelement gebildet werden oder nachträglich an, in oder auf der Lichteintrittsfläche 3a und/oder der Mantelfläche vorgesehen und/oder aufgebracht werden.

Der Diffusor kann alternativ als Volumen-Diffusor wie ebenfalls in https://de.wikipedia.orq/w/index.php?title=Diffusor (Optik)&oldid=245594983 beschrieben in einem Bereich nahe einer Oberfläche der Lichteintrittsfläche 3a und/oder der Mantelfläche gebildet sein wobei eine Dicke des Bereichs senkrecht zur Oberfläche insbesondere zwischen einem Zehntel und einem Vielfachen einer Wellenlänge oder der Wellenlängen einer Lichtstrahlung betragen, die der Diffusor streuen soll.

Der Diffusor kann sich über die gesamte Lichteintrittsfläche erstrecken und/oder über eine gesamte, insbesondere untere, Seitenfläche.

Durch den Diffusor wird das weiter oben beschriebene Zurückstrahlen von Licht, welches unter einem vergleichsweise kleinen Winkel - insbesondere einem Winkel von weniger als 20°, 15° oder gar 10° - zur optischen Achse (der Sammellinse bzw. des Lichtleiterstabs) durch die Sammellinse 5 zumindest annähernd in Richtung der LED-Lichtquelle einfällt bzw. eingestrahlt wird, zumindest weitgehend verhindert, insbesondere wenn dieser sich auf, an und/oder in einem wesentlichen Teil und/oder Bereich der Lichteintrittsfläche 3a erstreckt, und/oder in einem wesentlichen Teil und/oder Bereich der Mantelfläche, auf welchen das unter kleinem Winkel einfallende Licht zuerst auftrifft. Insbesondere bei einem auf, an und/oder in der Lichteintrittsfläche 3a vorgesehenen Diffusor wird ein Einfangen von Licht einer vor der Lichteintrittsfläche 3a angeordneten LED-Lichtquelle nicht in nennenswerter Weise beeinträchtigt, so dass eine (maximale) Helligkeit und/oder ein (maximaler) Kontrast im Vergleich zu einer glatten oder optisch hochglanzpolierten Oberfläche allenfalls in unwesentlicher Weise reduziert wird. Auch bei einem in geeigneter Weise auf, an und/oder in einem Bereich der Mantelfläche platzierten Diffusor bleibt eine Beeinträchtigung von (maximaler) Helligkeit und/oder (maximalem) Kontrast zumindest weitgehend aus, insbesondere soweit der Bereich klein im Vergleich zur gesamten Mantelfläche ist, insbesondere wesentlich kleiner als die gesamte Mantelfläche.

Eine farb- und/oder lichtmischende Sammeloptik gemäss der Erfindung wie nachfolgend beansprucht kann die Merkmale von Anspruch 9 weiter unten umfassen.

Sie kann insbesondere ein optisches Element wie vorstehend beschrieben umfassen, welches in Bezug auf eine LED-Lichtquelle derart angeordnet sein kann, dass von der LED-Lichtquelle emittiertes Licht zumindest zu einem überwiegenden Teil durch die Lichteintrittsfläche in das Lichtmischelement des optischen Elements eintritt. Die LED-Lichtquelle kann dabei insbesondere mehrere LED-Kristalle enthalten, wobei das optische Element insbesondere derart angeordnet sein kann, dass emittiertes Licht aus jedem der mehreren LED-Kristalle zumindest zu einem überwiegenden Teil durch die Lichteintrittsfläche in das Lichtmischelement des optischen Elements eintritt.

Eine Anzeigetafel und/oder Signalisierung gemäss der Erfindung wie nachfolgend beansprucht kann die Merkmale eines der Ansprüche 11 bis 15 weiter unten umfassen.

Die Anzeigetafel und/oder Signalisierung kann eine Anzeigefläche aufweisen, welche eine Information darstellen kann, insbesondere in Form von Text, ein oder mehreren Symbolen und/oder Graphiken bzw. Bildern. Sie kann ferner insbesondere für eine Aufstellung und/oder Montage im Freien ausgelegt sein, insbesondere an oder über einem Verkehrsweg wie beispielsweise einer Strasse, um Fahrzeugen respektive deren Führern verkehrsleitende und/oder -regelnde Informationen und/oder Vorschriften anzuzeigen. Dabei kann die Anzeigefläche zumindest im Wesentlichen senkrecht orientiert sein und/oder werden, so dass insbesondere eine Oberflächennormale der Anzeigetafel in einer zumindest annähernd horizontalen Richtung ausgerichtet ist. Die optischen Elemente können dabei insbesondere derart in der Anzeigetafel und/oder Signalisierung angeordnet und/oder befestigt sein, dass die optischen Achsen von Lichtmisch- und/oder -sammelelement ebenfalls in jeweils einer zumindest annähernd horizontalen Richtung ausgerichtet sind., insbesondere parallel zur Oberflächennormale.

Sie kann insbesondere eine Vielzahl von farb- und/oder lichtmischenden Sammeloptiken wie oben beschrieben umfassen, welche wiederum je ein optisches Element wie weiter oben beschrieben umfassen können.

Vorteilhafte Ausgestaltungen der Erfindung sind Gegenstand der Unteransprüche, und/oder ergeben sich aus der nachfolgenden Beschreibung in Verbindung mit den Zeichnungen.

Im Folgenden wird anhand beiliegender Zeichnungen ein bevorzugtes Ausführungsbeispiel der Erfindung beschrieben.

### Es zeigen

- Figur 1: Draufsichten auf unterschiedliche Raster von Spiegelbildern einer durch einen Lichtleiterstab betrachteten Lichtquelle;
- Figur 2: weitere Draufsichten auf unterschiedliche Raster von Spiegelbildern einer durch einen Lichtleiterstab betrachteten Lichtquelle;
- Figur 3: eine farb- und/oder lichtmischende Sammeloptik aus der EP 2 643 717 A1;
- Figur 4: eine weitere farb- und/oder lichtmischende Sammeloptik aus der EP 2 643 717 A1;
- Figur 5: eine weitere farb- und/oder lichtmischende Sammeloptik aus der EP 2 643 717 A1;
- Figur 6: ein erstes Ausführungsbeispiel eines erfindungsgemässen optischen Elements;
- Figur 7: ein zweites Ausführungsbeispiel eines erfindungsgemässen optischen Elements.

### Wege zur Ausführung der Erfindung

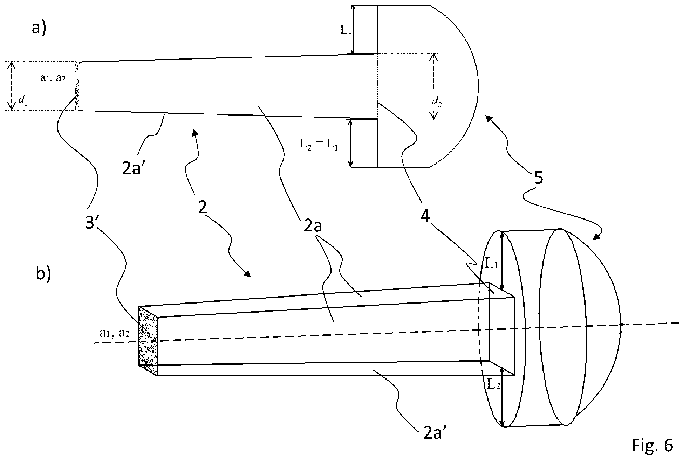

In einer ersten beispielhaften Ausführungsform wie insbesondere in Figur 6 gezeigt umfasst ein erfindungsgemässes optisches Element, insbesondere zur Verwendung als Lichtmischelement in einer farb- und/oder lichtmischenden Sammeloptik, ein Lichtmischelement in Form eines Lichtleiterstabs 2, mit einer Lichteintrittsfläche 3', einem Lichtaustritt 4 und einer Mantelfläche, die sich zwischen der Lichteintrittsfläche 3 und dem Lichtaustritt 4 erstreckt, wobei die Mantelfläche vier Seitenflächen 2a umfasst, die sich zwischen der Lichteintrittsfläche 3' und dem Lichtaustritt 4 erstrecken; ein Lichtsammelelement in Form einer Linse, insbesondere einer Sammellinse 5, welche angeordnet ist, um vom Lichtmischelement gemischtes und/oder aus dem Lichtaustritt austretendes Licht zumindest teilweise zu sammeln und/oder bündeln; wobei die Lichteintrittsfläche 3' als Diffusor ausgebildet ist. Eine Dicke *d* des Lichtmischelements nimmt von einem minimalen Wert *d*₁ an der Lichteintrittsfläche 3' kontinuierlich bis zu einem maximalen Wert *d*₂ am Lichtaustritt 4 zu; in ähnlicher Weise eine Breite b des Lichtmischelements.

Eine optische Achse a₁ des Lichtmischelements verläuft parallel zu einer Längsrichtung und/oder einer Längsachse und fällt mit einer optischen Achse a₂ des Lichtsammelelements zusammen. Bezüglich einer zweiten und dritten Richtung senkrecht zur Längsrichtung und senkrecht zueinander ist das Lichtmischelement relativ zum Lichtsammelelement zentriert angeordnet, so dass insbesondere *L*₁ = *L*₂ gilt.

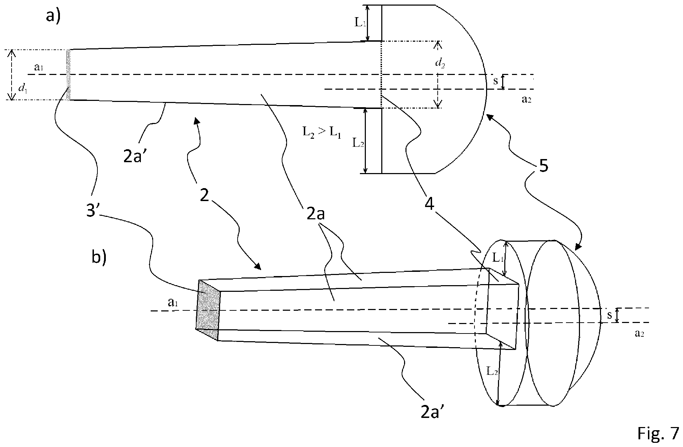

In einer zweiten beispielhaften Ausführungsformwie wie insbesondere in Figur 7 gezeigt umfasst ein erfindungsgemässes optisches Element, insbesondere zur Verwendung als Lichtmischelement in einer farb- und/oder lichtmischenden Sammeloptik, ein Lichtmischelement in Form eines Lichtleiterstab 2, mit einer Lichteintrittsfläche 3', einem Lichtaustritt 4 und einer Mantelfläche, die sich zwischen der Lichteintrittsfläche 3 und dem Lichtaustritt 4 er-streckt, wobei die Mantelfläche vier Seitenflächen 2a umfasst, die sich zwischen der Lichteintrittsfläche 3 und dem Lichtaustritt 4 erstrecken; ein Lichtsammelelement in Form einer Linse, insbesondere einer Sammellinse 5, welche angeordnet ist, um vom Lichtmischelement gemischtes und/oder aus dem Lichtaustritt austretendes Licht zumindest teilweise zu sammeln und/oder bündeln; wobei die Lichteintrittsfläche 3' als Diffusor ausgebildet ist. Eine Dicke *d* des Lichtmischelements nimmt von einem minimalen Wert *d*₁ an der Lichteintrittsfläche 3' kontinuierlich bis zu einem maximalen Wert *d*₂ am Lichtaustritt 4 zu; in ähnlicher Weise eine Breite b des Lichtmischelements.

Eine optische Achse a₁ des Lichtmischelements verläuft parallel zu einer Längsrichtung und/oder einer Längsachse und ist gegenüber einer optischen Achse a₂ des Lichtsammelelements um einen (vertikalen) Abstand s versetzt. Bezüglich einer zweiten und dritten Richtung senk-recht zur Längsrichtung und senkrecht zueinander ist das Lichtmischelement relativ zum Lichtsammelelement zentriert angeordnet, so dass insbesondere *L*₁ *< L*₂ gilt.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und oder Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen. Eine Angabe, wonach *a* ≈ *b* gilt, kann dahingehend zu verstehen sein, dass |*a*-*b*|/(|*a*|+|*b*|) < 0,2, vorzugsweise |*ab*|/(|*a*|+|*b*|) < 0,05, höchst vorzugsweise |*a*-*b*|/(|*a*|+|*b*|) < 0,01 gilt, wobei a und b beliebige, an irgendeiner Stelle in diesem Dokument definierte und/oder beschriebene oder anderweitig dem Fachmann bekannte Variablen oder Grössen repräsentieren kann. Ferner kann die Aussage, dass a zumindest annähernd oder im Wesentlichen gleich oder identisch mit *b* ist, implizieren, dass *a* ≈ *b* ist*,* und nicht ausschliessen, dass *a* = *b* gilt. Sofern nicht anders angegeben, kann im gesamten Dokument die Aussage *a » b* bedeuten, dass *a* > 5*b*, vorzugsweise *a* > 10*b*; und die Aussage a « *b* kann bedeuten, dass 5a < b, vorzugsweise 10a < b. Die Aussage, dass a wesentlich, erheblich oder signifikant grösser als *b* ist, kann bedeuten, dass *a* » *b* ist.

Der Ausdruck «einige» kann eine Anzahl zwischen 3 und 10, vorzugsweise zwischen 5 und 9 bezeichnen.

Dass ein Merkmal oder eine Eigenschaft, beispielsweise eine spezifische, insbesondere geometrische, Form, zumindest näherungsweise ausgebildet, vorgesehen oder vorhanden ist, kann insbesondere bedeuten, dass Fertigungsvorgaben existieren, welche eine Vorgabe vorsehen, gemäss welcher das Merkmal entsprechend ausgebildet wird, wobei im Rahmen üblicher, dem Fachmann bekannter Fertigungstoleranzen eine Abweichung von der Vorgabe resultieren kann.

Dass ein Element oder Merkmal in einer Richtung ausgedehnt ist oder sich in einer Richtung erstreckt, kann insbesondere bedeuten, dass Abmessungen des Elements oder Merkmals in dieser Richtung grösser sind als in anderen, insbesondere allen anderen Richtungen, insbesondere orthogonalen Richtungen.

Sämtliche oben in Bezug genommenen Dokumente, insbesondere Wikipedia-Artikel, gelten als in vollem Umfang per Verweisung inkludiert.

## Patentansprüche

1. Optisches Element, insbesondere zur Verwendung als Lichtmischelement in einer Farb- und/oder lichtmischenden Sammeloptik, insbesondere als vollfarbtaugliches Pixel für bildgebende Anzeigetafeln im Freien, für Spotlichter oder Signalisierung, umfassend
a. ein Lichtmischelement, insbesondere einen Lichtleiterstab (2), mit einer Lichteintrittsfläche (3') und einem Lichtaustritt (4) und einer Mantelfläche, die sich insbesondere zwischen der Lichteintrittsfläche (3) und dem Lichtaustritt (4) erstreckt;
b. ein Lichtsammelelement, insbesondere eine Sammellinse (5), welches angeordnet ist, um aus dem Lichtaustritt austretendes Licht zumindest teilweise zu sammeln und/oder bündeln; **dadurch gekennzeichnet, dass**
c. zumindest ein Teil der Lichteintrittsfläche (3') und/oder der Mantelfläche als Diffusor ausgebildet ist oder einen Diffusor aufweist.

2. Optisches Element nach Anspruch 1, **dadurch gekennzeichnet, dass**
a. das Lichtmischelement als Lichtleiterstab ausgebildet ist,
b. die Lichteintrittsfläche (3') an einem ersten Ende, insbesondere durch ein erstes Ende, des Lichtleiterstabs (2) ausgebildet ist, und
c. der Diffusor an, auf und/oder oder integral mit der Lichteintrittsfläche (3') und/oder der Mantelfläche ausgebildet ist.

3. Optisches Element nach Anspruch 1 der 2, **dadurch gekennzeichnet, dass**
a. der Diffusor durch einen aufgerauten Bereich der Lichteintrittsfläche (3') und/oder der Mantelfläche ausgebildet ist.

4. Optisches Element nach Anspruch 3, wobei der aufgeraute Bereich eine Oberflächenrauigkeit von Rₐ ≥ 0,4µm aufweist, insbesondere von Rₐ ≥ 0,5µm.

5. Optisches Element nach einem der vorangehenden Ansprüche, **dadurch gekennzeichnet, dass** wobei die gesamte Lichteintrittsfläche (3') aufgeraut ist, insbesondere zumindest annähernd gleichförmig aufgeraut ist.

6. Optisches Element nach einem der vorangehenden Ansprüche, **dadurch gekennzeichnet, dass** die Mantelfläche aus einer Vielzahl von aneinandergrenzenden, insbesondere scharfkantig aneinandergrenzenden, zumindest annähernd ebenen Seitenflächen (2a, 2a') gebildet ist.

7. Optisches Element nach einem der vorangehenden Ansprüche, **dadurch gekennzeichnet, dass** der Diffusor durch eine mikrooptische Struktur gebildet ist.

8. Optisches Element nach einem der vorangehenden Ansprüche, **dadurch gekennzeichnet, dass**
a. das Lichtmischelement eine erste optische Achse aufweist;
b. das Lichtsammelelement eine zweite optische Achse aufweist, welche insbesondere zumindest annähernd parallel zur ersten optischen Achse verläuft;
c. die erste optische Achse gegenüber der zweiten optischen Achse versetzt ist.

9. Farb- und/oder lichtmischende Sammeloptik, umfassend
a. eine LED-Lichtquelle (1), welche insbesondere mehrere LED-Kristalle enthält;
b. ein optisches Element nach einem der vorangehenden Ansprüche; wobei
c. das optische Element derart angeordnet ist, dass von der LED-Lichtquelle (1) emittiertes Licht, insbesondere von jedem LED-Kristall emittiertes Licht, durch die Lichteintrittsfläche in das Lichtmischelement eintritt.

10. Farb- und/oder lichtmischende Sammeloptik nach dem vorangehenden Anspruch, **dadurch gekennzeichnet, dass** die Lichteintrittsfläche (3) des Lichtleiterstabes (2) vor einer Lichtaustrittsfläche der LED-Lichtquelle (1) angeordnet ist und Licht jedes LED-Kristalls einfängt.

11. Anzeigetafel und/oder Signalisierung mit einer Anzeigefläche, welche eine Vielzahl von farb- und/oder lichtmischenden Sammeloptiken nach einem der Ansprüche 9 bis 10 enthält, welche insbesondere in als zweidimensionale Matrix und/oder in mehreren Zeilen und Spalten angeordnet sind, angeordnet sind, wobei die Anzeigefläche eine Oberflächennormale aufweist und die farb- und/oder lichtmischenden Sammeloptiken so angeordnet und/oder ausgerichtet sind, dass eine optische Achse der Lichtmischelemente und/oder der Lichtsammelelemente zumindest annähernd parallel zu der Oberflächennormale verläuft.

12. Anzeigetafel und/oder Signalisierung mit einer Anzeigefläche, insbesondere nach Anspruch 11, die einen oberen und einen unteren Rand aufweist, wobei die Anzeigetafel und/oder Signalisierung dazu ausgelegt ist, mit der Anzeigefläche in zumindest annähernd vertikaler Orientierung aufgestellt und/oder montiert zu werden, so dass insbesondere die Oberflächennormale in einer zumindest annähernd horizontalen Richtung verläuft und der obere Rand der Anzeigefläche oberhalb des unteren Rands verläuft, **dadurch gekennzeichnet, dass** bei derartiger Aufstellung und/oder Montage der Anzeigetafel und/oder Signalisierung der Diffusor in einem unteren Teil der Mantelfläche, insbesondere einem Bereich einer unteren der Seitenflächen, ausgebildet ist oder ein unterer Teil der Mantelfläche, insbesondere ein Bereich einer unteren der Seitenflächen, den Diffusor aufweist.

13. Anzeigetafel und/oder Signalisierung mit einer Anzeigefläche, insbesondere nach Anspruch 11, welche eine Vielzahl von farb- und/oder lichtmischenden Sammeloptiken nach einem der Ansprüche 9 bis 10 enthält, bei welchen ein erster Teil der Mantelfläche des Lichtmischelements des optischen Elements als Diffusor ausgebildet ist oder einen Diffusor aufweist, wobei die Anzeigetafel und/oder Signalisierung derart aufgestellt und/oder montiert ist, dass der erste Teil der Mantelfläche sich an einer Unterseite des Lichtmischelements befindet und/oder nach unten weist, wobei die Anzeigefläche insbesondere in vertikaler Richtung orientiert ist.

14. Anzeigetafel und/oder Signalisierung mit einer Anzeigefläche nach Anspruch 13, wobei die Mantelfläche insbesondere gemäss Anspruch 6 aus einer Vielzahl von aneinandergrenzenden, insbesondere scharfkantig aneinandergrenzenden, zumindest annähernd ebenen Seitenflächen (2a, 2a') gebildet ist, wobei der erste Teil der Mantelfläche durch eine untere, insbesondere im Wesentlichen horizontal verlaufende, Seitenfläche (2a') aus der Vielzahl der Seitenflächen (2a, 2a') gebildet wird.

15. Anzeigetafel und/oder Signalisierung mit einer Anzeigefläche nach Anspruch 13 oder 14, wobei ein zweiter Teil der Mantelfläche eine glatte Oberfläche aufweist, insbesondere poliert ist; wobei der zweite Teil der Mantelfläche insbesondere eine, mehrere oder alle oberhalb der unteren Seitenfläche (2a') angeordneten Seitenflächen (2a) umfasst.
